# EUROPEAN PATENT APPLICATION

(11) **EP 2 676 582 A1**
(43) Date of publication of application: **25.12.2013**
(21) Application number: 13171739.9
(22) Date of filing: 12.06.2013
(51) Int. Cl.: A47J 31/40

(54) **A powder dispensing unit for vending machines for beverage preparation**

(30) Priority: 20.06.2012 IT MI20121081
(71) Applicant: F.A.S. International S.p.A., 36015 Schio (Vicenza) (IT)
(72) Inventor: Morabito, Giuseppe, 36014 Santorso VI (IT); Cattaneo, Pietro, 36015 Schio VI (IT)
(74) Representative: Sgobba, Marco

(57) **Abstract**

A powder dispensing unit for vending machines for beverage preparation, comprises a plurality of distinct powder containing chambers (2), metering members (10) selectively operable on one containing chamber (2) at a time, and designed to draw powder from the containing chambers (2) and deliver it to a percolation and/or infusion chamber (8), the metering members (10) and the containing chambers (2) being movable relative to each other to selectively present one containing chamber (2) at a time to the metering members (10). A cover (3) is operable within each containing chamber, and is movable within the containing chamber by being driven by the metering members (10).

## Description

### TECHNICAL FIELD

The present invention relates to a powder dispensing unit for use in vending machines for beverage preparation.

### BACKGROUND OF THE INVENTION

Soluble or infusion powders are used in vending machines for preparation of beverages to be dispensed upon user's request. An example of infusion powder is ground coffee, that is used for preparing espresso. Espresso coffee is a beverage obtained by percolation of pressurized hot water through a layer of ground coffee. As water flows through the ground coffee, its pressure drops and the beverage is dispensed at atmospheric pressure. Due to the particularly fine grinding of roasted coffee and to compaction of the ground powder, the percolation water encounters such a resistance as to allow extraction of aromatic substances that provide creaminess, flavor, body and aftertaste to the beverage.

Different coffee qualities impart different tastes, flavors and organoleptic properties to the beverage. Infinite combinations of tastes and flavors may be obtained by blending together different coffee qualities. The various types of blends may be also treated to extract the caffeine content from coffee, to obtain decaffeinated coffee.

Each consumer has his/her own preferences in terms of taste of the prepared beverage; modern vending machines must provide at least the selection between "normal" and decaffeinated coffee.

On the other hand, soluble powders are used in vending machines to prepare beverages having the taste of chocolate, milk, milk and.chocolate and the like. Soluble powders are mixed with hot water to be dissolved therein and provide the beverage.

Also in this case, an infinite number of possible combinations of soluble powders exist, to obtain a wide range of beverage types.

It will be understood from the above that vending machines must be able to store various types of powders to prepare different types of beverages, such that the requirements of a plurality of users can be met.

For this purpose, vending machines are known to be equipped with a plurality of powder dose dispensers, each having a containing chamber for a type of powder and metering members for drawing a powder dose required for the preparation of a beverage from the containing chamber. The metering members usually consist of an electric motor that rotates an auger plunging in the containing chamber and leading to a powder compacting device. As the auger rotates, powder is drawn from the containing chamber and sent to the compacting device, which compacts the powder to prepare them for delivery to a percolation/mixing chamber for beverage preparation.

Prior art powder dose dispensers for use in vending machines for beverage preparation have a few drawbacks.

Although a large space is available for the dispensers in the vending machine, it still cannot accommodate a large number of dispensers. This is because the dimensions of a dispenser are given both by the powder containing chamber and by the metering members which, amongst other things, must be connected in parallel to the percolation/mixing chamber for beverage preparation.

Furthermore, the manufacturing cost of each dispenser has a non-negligible incidence on the global manufacturing cost of the vending machine, as the metering members require an electric motor for each containing chamber (note that the containing chambers are usually made of a plastic material that is suitable for storage of food products and have negligible manufacturing cost, as compared with the metering members).

Also, freshness of the ground blend is of critical importance, as ground coffee tends to oxidize with time, thereby causing the oily substances contained therein to turn rancid, which will affect cream production and alter taste. The above briefly described dispensing units of the prior art do not allow preservation of the freshness of the ground blend for sufficiently long times.

In the light of the above described prior art, the technical purpose of the present invention is to provide a powder dispensing unit for use in vending machines for beverage preparation, that obviates the above drawbacks.

Particularly, an object of the present invention is to provide a powder dispensing unit for use in vending machines for beverage preparation, that allows storage of a large number of powder types.

A further object of the present invention is to provide a powder dispensing unit for use in vending machines for beverage preparation that has lower manufacturing costs than in the prior art, assuming equal numbers of dispensable powder types.

Yet another object of the present invention is to provide a powder dispensing unit for use in vending machines for beverage preparation, that allows the organoleptic properties of the ground blend to be preserved for a long time.

### SUMMARY OF THE INVENTION

According to the present invention, the technical purpose and the intended objects are fulfilled by a powder dispensing unit for use in vending machines for beverage preparation as defined by the features of one or more of the annexed claims.

### BRIEF DESCRIPTION OF THE DRAWINGS

The features and advantages of the invention will appear from the following detailed description of an embodiment, which is illustrated without limitation in the annexed drawings, in which:
- Figure 1 shows a perspective schematic view of a powder dispensing unit for use in vending machines for beverage preparation according to the present invention;
- Figure 2 shows the dispensing unit of Figure 1, with certain parts omitted to better show other parts;
- Figure 3 is a sectional view of the dispensing unit of Figure 1; and
- Figure 4 is an enlarged view of a few details of the dispensing unit of Figure 2.

### DETAILED DESCRIPTION OF THE INVENTION

An infusion powder dispensing unit for use in vending machines according to the present invention will be generally designated by numeral 1.

The dispensing unit 1 (hereinafter dispenser 1) of the present invention is adapted to store and dispense powder doses for beverage preparation in vending machines.

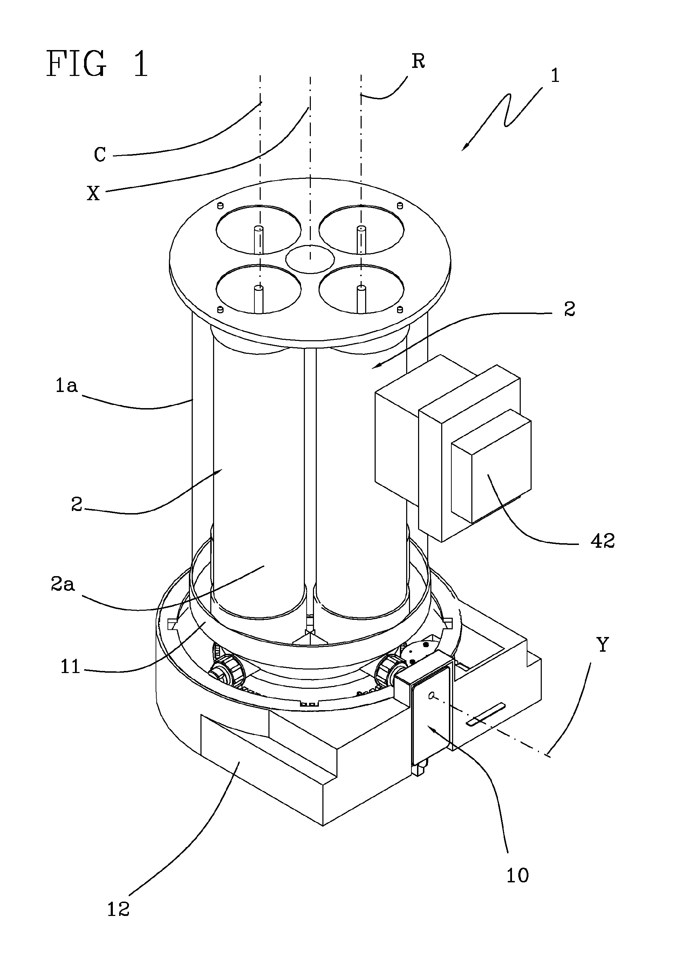

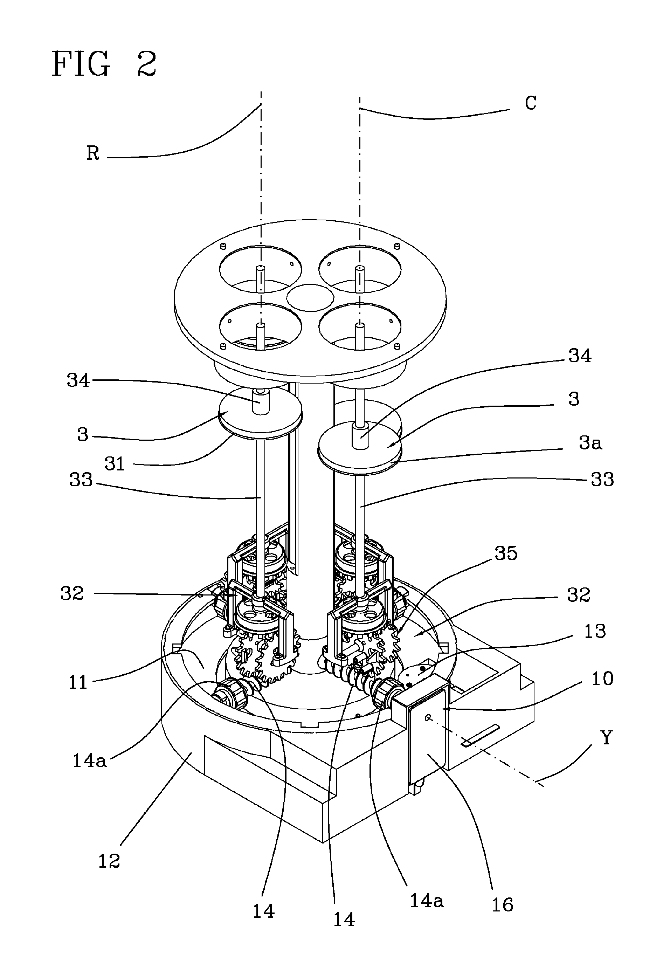

The dispenser 1 comprises a plurality of distinct containing chambers 2, containing infusion and/or mixing powdered products. An example of infusion powder is ground coffee, which is used for coffee preparation, and an example of mixing powder is powdered milk or chocolate. The containing chambers 2 are distinct in that each of them is adapted to store powder, but the powder of one chamber cannot spread over or mix with the powder contained in another chamber. Preferably, there are at least two containing chambers. In the preferred embodiment of the invention, there are four containing chambers 2, as shown in Figure 1. The containing chambers 2 have a prismatic shape and are preferably formed as cylinders in side-by-side arrangement. As used herein, a cylindrical shape is intended as a substantially cylindrical shape, i.e. a shape resembling a cylinder; in other words, the above mentioned cylindrical shape shall not be necessarily intended in a strict geometric sense. All the containing chambers 2 are designed to be rotated about the same axis of rotation X and have respective length axes C parallel to the axis of rotation X. It shall be noted that the axis of rotation X is external to all the containing chambers 2, which means that it does not extend through the chambers 2. Each chamber 2 has its own top cover 3 (see Figure 2) which slides in the chamber 2, and particularly slides in a direction parallel to the axis X. Each top cover 3 always substantially contacts the surface of the powder contained in the chamber 2, and lowers as the surface of the powder lowers. This will both prevent foreign matter from entering the containing chamber 2, and allow the powder to be less exposed to air, for improved preservation of their organoleptic properties. Preferably, the containing chambers 2 are made of a food-grade plastic material.

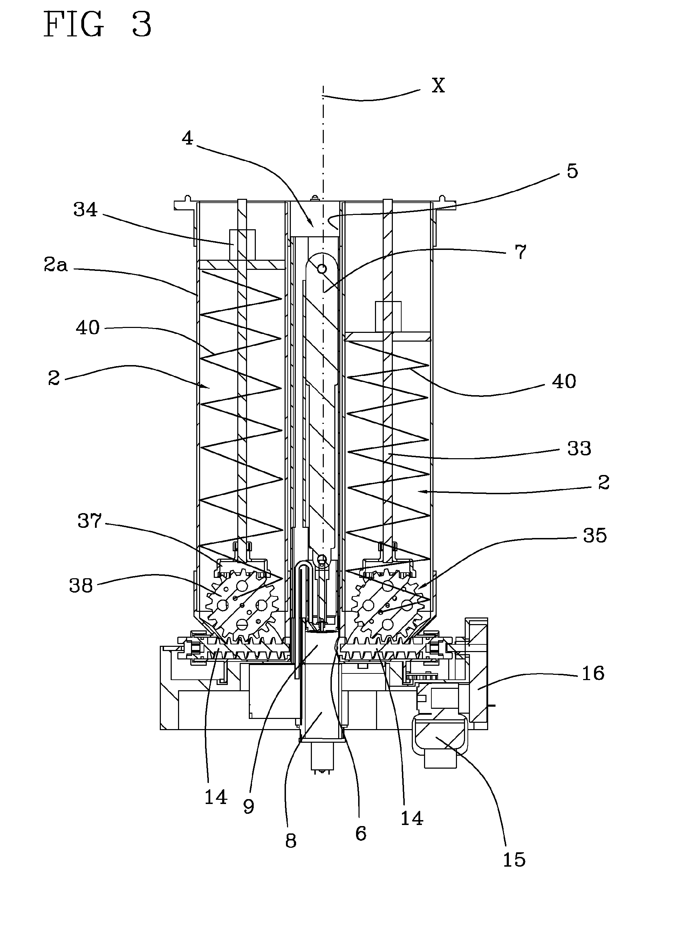

The dispenser 1 also comprises compacting members 4, which are designed to press a powder dose from one of the containing chambers 2 (as explained below) to form a pellet to be transferred to a percolation and/or infusion chamber 8 for beverage preparation. In the preferred embodiment of the invention, this percolation and/or infusion chamber 8 is housed in the dispenser, preferably in a lower portion thereof. The compacting members 4 comprise a cylinder 5, surrounded by the containing chambers 2 (see Figure 3). The cylinder 5 is stationary and the containing chambers 2 rotate relative to it. Particularly, the cylinder 5 acts as a guide for rotation of the chambers 2. The cylinder 5 has a longitudinal axis that coincides with the axis of rotation X of the chambers 2. The cylinder 5 has an aperture 6 in the proximity of the bottom of the chambers 2 (see Figure 3), for selective fluid communication of each containing chamber 2 with the interior of the cylinder such that powder doses can be transferred thereto. It shall be noted that the cylinder 5 has a single aperture 6 for powder admission. The compacting members 4 further comprise a piston 7 (see Figure 3), which is adapted to slide in the cylinder 5 to compact the powder transferred thereto. The above mentioned percolation and/or infusion chamber 8 is located at the end portion of the cylinder 5. The space bounded by the piston 7 and the interior of the cylinder 5 forms a compacting chamber 9, which preferably coincides with the infusion and/or percolation chamber 8. When the powder has been loaded in the compacting chamber 9, the piston 7 is in its lifted position. Then, the piston 7 is lowered, and compacts the powder, thereby reducing the volume of the compacting chamber 9. As soon as the powder has been compacted into a pellet, the percolation and/or compacting chamber causes hot water to flow through the pellet to obtain the desired beverage. It shall be noted that the aperture 6 in the cylinder 5 faces the compacting chamber 9 when the piston 7 is in its lifted position, and that the aperture 6 is closed by the piston 7 when the latter is in its lowered position.

The dispenser 1 comprises metering members 10 selectively operating on one containing chamber 2 at a time, and designed to draw powder from the containing chambers 2 and deliver it to the compacting members 4. The metering members 10 and the containing chambers 2 are adapted to move relative to each other such that the metering members 10 selectively face a single containing chamber. In the preferred embodiment of the invention, the containing chambers are designed to rotate and the metering members 10 are stationary. For this purpose, the dispenser 1 comprises a storage base 11 from which the containing chambers 2 extend. The storage base 11 is designed to rotate about the above mentioned axis of rotation X relative to a support frame 12 for the metering members 10. The support base 12 supports both the metering members 10 and the storage base 11. The storage base 11 has a substantially circular shape, with drive members 13 operating to rotate it.

Advantageously, each cover 3 is movable within its respective containing chamber 2 by being driven by the metering members 10.

Each containing chamber 2 has an auger 14 therein (see Figure 3), which extends through the entire containing chamber 2 in a direction perpendicular to the axis of rotation X. Particularly, each auger 14 has an axis of rotation Y. Each auger 14 extends from the perimeter wall of the storage base 11 to the wall of the cylinder 5, level with the aperture 6. The first end of the auger 14, i.e. the end at the perimeter wall of the storage base 11, is equipped with a bushing 14a, which is designed to receive a rotating shaft in mechanical connection therewith. As the auger 14 is rotated, it conveys the powder contained in the containing chamber 2 toward the percolation and/or infusion chamber 8, particularly toward the aperture 6 of the compacting members 4. Here, each auger 14 is selectively engaged by the metering members 10, which transfer amounts of motion to the auger 14 to rotate it.

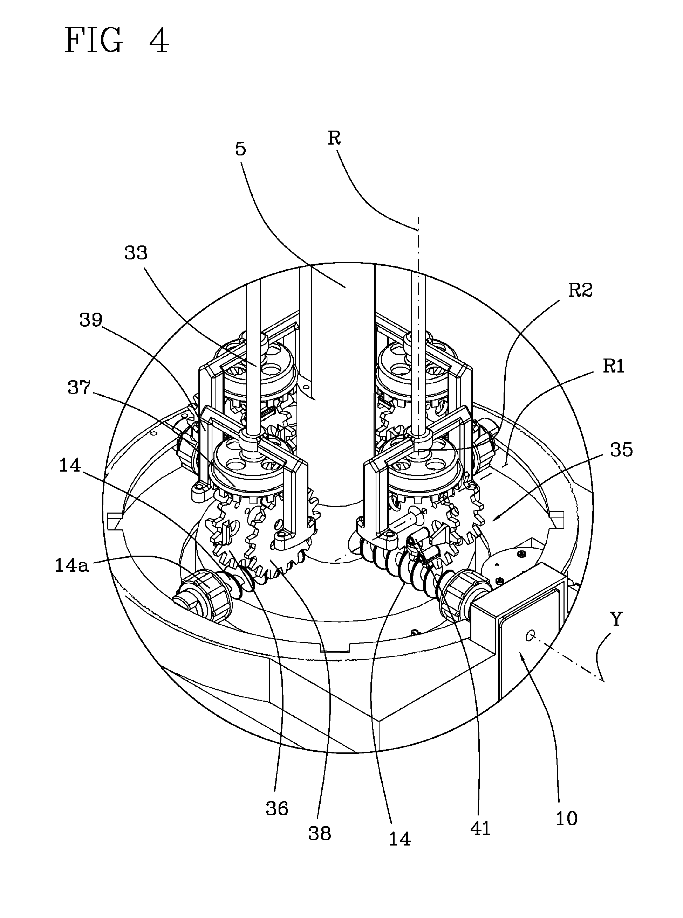

Advantageously, the rotation of an auger 14 causes the movement of its respective cover 3. Therefore, the motion transferred from the metering members 10 to the auger 14 is also used to lower a respective cover 3 in the containing chamber 2 (as shown in Figures 2 and 4). The cover 3 is designed to compress the powder in the containing chamber 2. As powder is compacted, its volume can be reduced, and the air in the volume occupied by the powder is eliminated or anyway minimized. The reduction of air in the volume occupied by the powder reduces its oxidation, thereby preserving its organoleptic properties. It shall be noted that each cover 3 is shaped to conform its respective containing chamber 2. In the preferred embodiment of the invention, the cover 3 has a cylindrical shape. Particularly, the cover is in sliding contact with the side wall 2a of the containing chamber 2, which will prevent the powder from penetrating between the cover 3 and the side wall 2a of the containing chamber 2 during compaction, which would neutralize the compaction effect. Furthermore, in order that good sealing is ensured between the cover 3 and the side wall 2a of the containing chamber 2, a seal 31 is provided on the perimeter edge of the cover 3, which contacts the side wall of the containing chamber. The seal 31 is preferably made of a compliant material.

A mechanism is provided between each cover 3 and its respective auger 14, for mechanically connecting the cover 3 to its respective auger 14 and allow the cover 3 to be driven by the motion of the auger 14. This mechanism 32 comprises a worm 33 which is operable on the cover 3 and has an axis of rotation R substantially parallel to the length axis C of the containing chamber 2. Advantageously, a clutch 34 (as schematically shown in the annexed figures) is operable between the worm 33 and the cover 3, to release the cover 3 from the worm 33 as soon as a preset torque value is reached. In other words, as the cover 3 is lowered by the rotation of the worm 33 and the powder is compacted thereby, the force required for powder compaction increases, and the torque applied by the worm on the cover 3 also increases as a result. As a torque limit value is reached, the clutch 34 operates to disengage the worm 33 from the cover 3 and stop the downward motion of the cover 3. The limit value is preferably preset and depends on the type of powder to be compacted and on the degree of compaction to be achieved. It shall be noted that the clutch is placed in a position in which it does not contact the powder. In the embodiment as shown in the annexed figures, the clutch 34 is placed at the cover 3 on the side that faces away from the auger 14.

Drive members 35 are operable between the worm 33 and the auger 14 to transfer motion from the auger 14 to the worm 33 (see Figures 3 and 3). As shown in Figure 4, the drive members 35 comprise a first gearwheel 36 meshing with the auger 14, and having an axis of rotation R1 substantially perpendicular to the axis of rotation Y of the auger 14 and a second gearwheel 37 having an axis of rotation R2 substantially coincident with the axis of rotation R of the worm 33. The drive members 35 further comprise a third gearwheel 38 having the same axis of rotation R1 as the first gearwheel 36 and being rotated thereby. The second gearwheel 37 meshes with the third gearwheel 38. In order to maintain the gearwheels and their rotating shafts in their preset positions, a frame 38 is provided for rotatably supporting the shafts (which coincide with the axes of rotation) of the three gearwheels and the worm.

The dispenser 1 further comprises an agitator 40 actuated by the mechanism 32, preferably of the first gearwheel 36, for mixing the powder at least proximate to the auger 14. The purpose of the agitator 40 is to mix the compressed powder, such that it may be consolidated into a single mass. This advantage is particularly appreciated in the proximity of the auger 14, as it allows the latter to effectively operate on the powder, and transfer it toward the percolation and/or infusion chamber. Preferably, the agitator 40 comprises a helical element, extending throughout the entire containing chamber 2. The helical element (as schematically shown in Figure 3) is elastically compliant along an axis that coincides with the length axis C of the containing chamber 2, such that it does not hinder the downward movement of the cover 3. In the preferred embodiment of the invention, the compliant helical element consists of a spring abutting the cover 3. The agitator 40 is connected to the first gearwheel 36 such that the rotation of the latter causes a rotation of the agitator 40. In the preferred embodiment of the invention, this rotation causes a rotation of the spring that forms the agitator about an axis that substantially coincides with the length axis C of the containing chamber 2. The agitator 40 is connected to the first gearwheel 36 at projections 41 that extend from the gearwheel in a direction parallel to their axis of rotation R1.

Preferably, an insulating material is inserted between the side wall 2a of each containing chamber 2 and a containing frame 1a of the dispensing unit 1, for thermally insulating the containing chambers 2 from the outside environment. The insulating material is preferably aerogel. Thus, the infusion powder is thermally insulated from the outside environment, i.e. from the interior of the vending machine, and this will prevent the infusion powder from being heated and being easily oxidized..In order to further reduce oxidation of the infusion powder, the dispenser 1 comprises cooling members 42 (see Figure 1) operating on the containing bodies 2. Thus, the powder is maintained at a low temperature, e.g. ranging from 2°C to 15°C, preferably from 2°C to 9°C, more preferably of about 4°C. In the preferred embodiment of the invention, the cooling members 42 are thermoelectric devices composed of many Peltier junctions connected in series, known with the name of Peltier cells. Preferably, the Peltier cells are located in the proximity of the upper portion of the containing bodies 2.

The metering members 10 comprise an electric motor 15 having a drive shaft which is mechanically connected to a transmission 16. The transmission 16 is movable relative to the drive shaft for connection to and disconnection from each auger 14. Particularly, the transmission 16 is designed for mechanical connection to the bushing 14a of the auger 14. The mobility of the transmission 16, i.e. its movement to and from the auger 14 is.provided by any mechanical or electromechanical device capable of moving the transmission. An exemplary device that can be used to move the transmission member is the clutch system of a starter motor of the type that is used in automobiles. As the containing chambers 2 are rotated, a bushing 14a of a given chamber 2 is carried in front of the transmission 16. As the latter is moved and connected to the bushing 14a, the auger 14 is actuated, and pushes the powder into the cylinder 5, namely in the compacting chamber 9, through the aperture 6.

Those skilled in the art will obviously appreciate that a number of changes and variants may be made to the arrangements as described hereinbefore to meet incidental and specific needs. All of these variants and changes fall within scope of the invention, as defined in the following claims.

## Claims

1. A powder dispensing unit for vending machines for beverage preparation, comprising a plurality of distinct powder containing chambers (2), metering members (10) selectively operating on one containing chamber (2) at a time, and designed to draw powder from the containing chambers (2) and deliver it towards a percolation and/or infusion chamber (8), said metering members (10) and said containing chambers (2) being movable relative to each other to selectively present one containing chamber (2) at a time to the metering members (10), a cover (3) being operable in each containing chamber, and adapted to move in the containing chamber, by being driven by said metering members (10).

2. A dispensing unit as claimed in claim 1, comprising an auger (14) operable in each of said containing chambers (2), each auger (14) being selectively engageable by said metering members (10) to transfer powder doses toward the percolation and/or infusion chamber (8); a mechanism (32) being provided between each cover (3) and its respective auger (14) for mechanically connecting the cover (3) to its respective auger (14).

3. A dispensing unit as claimed in claim 2, wherein said mechanism (32) comprises a worm (33) operable on the cover (3) and having an axis of rotation (R) substantially parallel to an axis of extension (C) of the containing chamber (2), drive members (35) being operable between said worm (33) and said auger (14) to transfer motion from the auger (14) to the worm.

4. A dispensing unit as claimed in claim 3, wherein said drive members (35) include a first gear wheel (36) meshing with said auger (14), and having an axis of rotation (R1) substantially perpendicular to the axis of rotation (Y) of the auger (14) and a second gear wheel (37) having an axis of rotation (R2) substantially coincident with the axis of rotation (R) of the worm (33).

5. A dispensing unit as claimed in claim 4, wherein said drive members (35) further includes a third gear wheel (38) having the same axis of rotation (R1) as the first gear wheel (36) and being rotated thereby; said second gear wheel (37) meshing with the third gear wheel (38).

6. A dispensing unit as claimed in claim 5, comprising a clutch (34) operable between said cover (3) and the worm (33) for uncoupling the worm (33) from the cover (3) as soon as a predetermined torque value is exceeded.

7. A dispensing unit as claimed in any claim from 2 to 6, comprising an agitator (40) actuated by said mechanism (32) for mixing the powder at least proximate to the auger (14).

8. A dispensing unit as claimed in any preceding claim, wherein said metering members (10) comprise an electric motor (15) having a drive shaft mechanically coupled to a transmission (16); said transmission (16) being movable relative to said shaft to be mechanically and selectively coupled and uncoupled to and from each of said augers (14).

9. A dispensing unit as claimed in any preceding claim, comprising a storage base (11), said containing chambers (2) extending away therefrom; said storage base (11) being rotatable about an axis of rotation (X) relative to a support base (12) for said metering members (10).

10. A vending machine comprising at least one dispensing unit (1) as claimed in one or more of the preceding claims.
